# EUROPEAN PATENT SPECIFICATION

(11) **EP 3 079 332 B1**
(45) Date of publication and mention of the grant of the patent: **16.03.2022**
(21) Application number: 15163278.3
(22) Date of filing: 10.04.2015
(51) Int. Cl.: H04L 29/06, H04W 4/02, H04W 4/90

(54) **TRUSTED USER LOCATION INFORMATION FOR USERS ACCESSING A TRUSTED DOMAIN VIA AN UN-TRUSTED NETWORK**
VERTRAUENSWÜRDIGE BENUTZERSTANDORTINFORMATIONEN FÜR BENUTZER, DIE ÜBER EIN NICHT VERTRAUENSWÜRDIGES NETZWERK AUF EINE VERTRAUENSWÜRDIGE DOMÄNE ZUGREIFEN
INFORMATIONS DE LOCALISATION D'UTILISATEUR DE CONFIANCE POUR UTILISATEURS ACCÉDANT À UN DOMAINE DE CONFIANCE PAR L'INTERMÉDIAIRE D'UN RÉSEAU NON SÉCURISÉ

(43) Date of publication of application: 12.10.2016
(73) Proprietor: Vodafone GmbH, 40549 Düsseldorf (DE)
(72) Inventor: Niks, David, 6295 AH Lemiers (NL); Rameil-Green, Marc Andre, 40489 Düsseldorf (DE)
(74) Representative: Keenway Patentanwälte Neumann Heine Taruttis

(56) References cited:
- US-A1- 2011 176 486
- "3rd Generation Partnership Project; Technical Specification Group Services and System Aspects; Study on network provided location information to the IP Multimedia Subsystem (IMS) (Release 11)", 3GPP DRAFT; 23842-B00, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 23 July 2013 (2013-07-23), XP050725494, Retrieved from the Internet: URL:http://www.3gpp.org/ftp/tsg_sa/WG2_Arc h/Latest_SA2_Specs/Rel-11/ [retrieved on 2013-07-23]

## Description

The present invention relates to a method and a corresponding network for providing trusted and reliable user location information of an end-point coupled via an un-trusted and/or non-3GPP-type access network.

By introduction of long term evolution (LTE), respectively 4G, mobile communication is amongst others conveyed via packet switched (PS) networks. First and foremost internet protocol (IP) multimedia subsystem (IMS) specified by the Third Generation Partnership Project committee (3GPP) is used for such PS networks. The basic protocol for information exchange in IMS networks is the session initiation protocol (SIP).

For certain applications and services, like emergency calls, differential charging/access based tariff, location targeting, statistics and etc. information about the location, i.e. the geographical position of a user or subscriber, more precisely of the user equipment (UE) of said user, and eventually about the access type (IP-connectivity access network (IP-CAN)) and access class (radio access type (RAT)) is required. Note that the physical device that runs the SIP User Agent Client, i.e. the device that exchanges information with the IMS, is called end-point in the following description.

This user location information (ULI) for SIP requests or responses is normally provided via a so called Private-Access-Network-Info (PANI) header for SIP, which header is specified in RFC 3455 by the Internet Engineering Task Force (IETF) and referenced by the 3GPP. However, the user location information in this PANI header, which is provided by a user, can only be generated if the end-point of said user, accesses the IMS via a 3GPP-type network, i.e. a 3GPP radio access network UTRAN. The generated 3GPP location can potentially be used for representing a meaningful location, i.e. a geographical location, by a sip proxy or application server that is able to consume the ULI.

US 2011/176486 A1 describes a system and method for reporting trusted access network information for a user equipment (UE) being connected via an 3-GPP-type access network node like enhanced NodeB (eNB), evolved Universal Terrestrial Radio Access Network (e-UTRAN) and Radio Network Controller (RNC) in UTRAN.

In 3GPP TR 23.842 V11.0.0 sources for network provided location information to an IMS are disclosed.

If the end-point is connected via a non-3GPP-type network, like WiFi, etc. the PANI header does not contain ULI, because there is no trusted 3GPP user location available. Further, the information in PANI headers, or information in general, is only considered as trusted information if the source is a trusted network, respectively part of a Trusted Domain (TD). Commonly only the core network of a provider is considered as trusted by that provider. However, ULI by making use of PANI headers can be provided by the end-point and hence the provided information might be manipulated. Additionally, PANI headers are only inserted in requests or responses from the end-point.

Consequently, the ULI required by some applications cannot be reliably provided for end-points that do not access the IMS via a trusted network, respectively the core-network of the provider. In addition the provided ULI of a user provided PANI header is never considered as trusted information as already mentioned above.

Hence a method for IMS and a corresponding IMS core-network for providing trusted location information for users when accessing an IMS via an un-trusted/non-3GPP-type network, is desirable.

The objective of the present invention is to solve or at least to alleviate the technical problems and disadvantages inherent to the prior art and as set forth above. Thereto a method , as further defined in claim 1, is proposed, which provides trusted user location information for a user being camped on an un-trusted network, respectively a non-3GPP-type network.

### BRIEF DESCRIPTION OF THE DRAWINGS

The objects, advantages and other features of the disclosed solution will become more apparent upon reading of the following non-restrictive description of an embodiment with reference to the accompanying figures, wherein
- Fig. 1:: depicts a block diagram of an infrastructure for providing mobile communication services and user location information.
- Fig. 2-4:: depict block diagrams of methods for retrieving user location information from 3^{rd} parties.

### DETAILED DESCRIPTION

The proposed method provides where necessary a supplementary header containing trusted user location information (ULI). This header conforms to RCF 3455 specifying private headers for session initiation protocol (SIP) messages. Therefore a private user location information (PULI) header is provided to all nodes in the remote leg of the SIP proxy or Application Server (AS) that inserts the ULI whenever the private access network information (PANI) header does not provide reliable user location information.

Note that the private access network information does not comprise reliable user location information in case it is populated with non-3GPP access information.

The usage of the private user location information, PULI, header is only applicable inside a Trusted Domain (TD) for a served user, as will become apparent by the description further below. A trusted domain is defined in section 2.3 of RFC 3324. Network-nodes in such a TD explicitly trust each other to carry the user location information and to be responsible for withholding sensitive or private information from the outside of the TD.

As the suggested PULI header lacks information about the instance that provided the location, it is assumed that the trusted domain itself provided the information in the private user location information header.

Hence, the user location information is only valid when securely received from a network-node known that is a member of the trusted domain. Attackers, i.e. any instance that could try to manipulate the user location information illicitly, are not supposed to have access to the messages transmitted within the trusted network. Such traffic protection can for example be achieved by using IPsec and/or physically protecting the network. In any case, the environment where the private user location info header will be used shall, i.e. must, ensure the integrity and confidentiality of the content of said PULI header.

An example of a trusted network is a closed network like an IMS core-network. However, an IMS core-network as used in the following description shall be understood merely as an exemplary embodiment, but shall not limit the scope of the present invention.

In general an end-point is connected to an IMS core-network of its provider via a SIP proxy server, which is a P-CSCF or an I-CSCF. Within a TD, which usually includes only network-nodes of the respective provider, PANI headers may be added to certain types of requests or responses (in general SIP messages). PANI can be added to a message either by the end-point or by a proxy call session control function (P-CSFC) of the IMS core-network based on information supplied by a policy and charging rules function (PCRF) or a network attachment subsystem (NASS). Such PANI contains a cell identifier or location identifier that is subsequently mapped, potentially by the recipient, into a real location.

The access network information (ANI) has to be consistent, that is the provided access network type and user location information must correspond to each other. Otherwise the PANI is considered as not reliable. Therefore manipulation of the PANI header, i.e. amending an existing PANI header such that the information is consistent, is not permitted.

If the user location information contained in a PANI header is considered to be un-trusted or unreliable, then a network provided private user location information header containing trusted user location information is provided besides said PANI header by the method and IMS core-network according to the present invention. Thereby, the PULI does explicitly not contain any access-type/IP-CAN information. In this way trusted user location information is provided in case the location information in the private access network information is considered to be not trustworthy.

If in one embodiment an end-point of a user, i.e. a user equipment (UE), accesses a trusted domain via an un-trusted network such as a non-3GPP-type network (WiFi, WLAN, IWLAN, WiMAX, etc.) the private access network information header does not contain reliable user location information. However, some services that are communicatively located within the trusted domain require trustworthy information about the user location, which now can be provided by the PULI header contained in a SIP message.

Reliable user location information (ULI) for an end-point of a user that transmits a SIP message (request or response) via an access network to a server (IMS node, SIP proxy, CSCF, etc.) of an IP multimedia subsystem (IMS) network located in a trusted domain can be provided according to the present invention. Thereto a Proxy Call Session Control Function (P-CSCF) identifies whether the access network is part of the trusted domain. In case the access network does not form part of the trusted domain, user location information is retrieved from a server located in the trusted domain (80). Then a private user location information (PULI) header comprising the retrieved user location information is added to the SIP message. Finally the SIP message including the PULI header may be forwarded to a server within the trusted domain.

Further, when an end-point registers with an IMS core-network, i.e. a trusted domain, a SIP proxy facing the end-point could insert network provided access network information (ANI) and additional access information prior to forwarding the registration request to a next hop that is communicatively located within the trusted domain. A similar case may occur with SIP requests or responses from an end-point. A SIP proxy facing such an end-point could similarly insert network provided ANI and additional access information prior to forwarding the registration request to a next hop. The thusly inserted ULI however may be unrelated to the ANI. Such manipulation of a PANI header is against the specifications in RFC 3455. If for example the IP-CAN (access-type) is non-3GPP and the radio access type (RAT) (access-calls) is WLAN, then the P-CSCF shall not provide user location information based on a request of the policy and charging rules function (PCRF). Therefore, a resulting PANI header thusly generated on the network side is not reliable. Instead a PULI header provided by the method and IMS core-network according to the present invention contains trusted user location information that can be used in addition to the access-type/IP-CAN and access-class/RAT provided by the PANI header for real-time communication. In this way trusted and reliable user location information can be provided in real-time, wherein said ULI is independent from the access-type/access-class or the PANI header, respectively.

In addition, when an initial request is forwarded to an end-point of a terminating user, this initial request does not contain a PANI header with any location information related to said terminating user. Such PANI header is not contained in any message until the terminating end-point replies with a first response. If, however, an application needs to act based on the location of the terminating end-point, e.g. when an incoming call shall be forwarded or to redirect said call to a voice response system, the end-point or user equipment (UE) would have to ring first in order to trigger a response from or on behalf of the end-point that contains location information, that means the end-point would have to answer the request before the location of the terminating end-point is known. Consequently this would result in poor user experience. This issue cannot be overcome by conventional SIP applications relying on user location information included in the PANI by 3rd party register requests, because this user location information may be outdated due to a long expiry timer for re-registration or there may be no 3rd party register at all, if for example the end-point is coupled via a CS network. In these cases a SIP proxy can retrieve the required user location information from a 3rd party server, like a gateway mobile location center (GMLC) or a home subscriber service (HSS) or a home location register (HLR) or a evolved packet core EPC (to obtain location information from a 4G network via a PS gateway at the Mobility Management Entity (MME)), and convey this information to applications that require trusted user location information in form of a private user location info header besides the PANI header according to the present invention.

If a signaling needs to traverse multiple SIP proxies it is further convenient that the user location information for the terminating user can be passed on to the next hop in form of a corresponding header, i.e. a private user location information header. In this way the information is retrieved by only one SIP proxy and forwarded to multiple application servers, hence there is no need for each application server (AS) to deploy interfaces for location retrieval. Hence, by using private user location information headers according to the present invention the time and efforts required for signaling SIP messages along multiple SIP proxies is reduced.

In case an end-point is in so-called flight mode, i.e. radio access to cellphone networks is switched off in the end-point device and consequently is not coupled via cellular access-network (2G/3G/4G), the end-point may still be coupled via a packet switched network using a non-3GPP-type network such as WiFi. In this situation trustworthy user location information cannot be retrieved via a cellular access-network (2G/3G/4G). Yet the IMS core-network may have stored information about the last location of the end-point when it was still logged in via a cellular access-network. This last known user location information may or may not reflect the actual active location of the end-point, i.e. the latest reliable user location information available in the IMS may be outdated. A SIP proxy retrieving the user location information from a 3rd party server (GMLC, EPC, HLR, HSS, etc.) has the capability to utilize an age and/or time-stamp of the retrieved user location information and must pass this information to the private user location information header according to the present invention. It is then dependent on operator policy as to whether the retrieved user location information is still considered trustworthy depending on the given age of said last known user location information. The age of the user location information can be determined by comparing a time-stamp reflecting the date-time of retrieval with the current date-time. Hence, this user location information can be used, according to respective provider policies, instead of real-time user location information that does not originate from a cellular access-network (2G/3G/4G). Consequently, user location information contained in a PULI header may not exceed a predefined age based on provider policy.

In case of an emergency call user location information of the respective user may be required, in many countries by law, for forwarding the location information to the emergency authorities in order to determine the responsible rescue coordination center. If a user accesses the core-network via a non-3GPP-network in a foreign country, then a PANI header will not contain reliable ULI and further a location query via a location retrieval function (LRF) might not be permitted. Additionally, a private visited network identity (PVNI) header will be created, which will convey the information that the user is in his home country, because the private visited network identity is created by the home core-network of the user. Then trusted user location information provided by a respective private user location information header besides the private access network information and private visited network information header as created by the method and IMS-core-network according to the present invention can be used. The required trusted user location information can be retrieved at the core-network side by the P-CSCF and the policy and charging rules function (PCRF) from sources like a GSM/GPRS/UMTS/LTE network node via a Location Service (also non-SIP mechanisms) or from a home subscriber service (HSS) containing the last known user location information when still coupled to a cellular network with a time-stamp and/or an age.

If an end-point is attached to one of a 2G/3G network or a 4G network, a SIP proxy may insert user location information retrieved either from the circuit switched network or the EPC. This ambiguity results in unreliable location information in a corresponding PANI header. Instead the PULI header can provide trusted ULI by inserting location info obtained from a trusted network server (e.g. EPC , HLR , HSS ,GMLC) through standardized interfaces (e.g. Sh, Rx, SLh and SLg).

In case one user uses an end-point including a subscriber identification module (SIM), i.e. a user equipment (UE) identifiable by a comprised SIM, and a SIM-less end-point, i.e. a user equipment that does not comprise a SIM and consequently is not identifiable by a subscriber identification module, wherein both end-points are associated with the same user profile (IMPU), then trustworthy access network information containing 3GPP user location information is available for said end-point comprising the SIM. Said trustworthy, i.e. reliable, user location information can be a cell-id or an evolved UMTS Terrestrial Radio Access Network (E-UTRAN) cell-id depending on the kind of the 3GPP network, GSM or GPRS or UMTS or LTE. Therefore, any location query (via LRF and/or PCRF/NASS) may return user location information that was generated for the associated end-point. As SIM-less end-points are not attached to any 3GPP networks they actually have no 3GPP location. The decision to allow the use of a user location information that originates from a device comprising a SIM for a SIM-less device is up to the operator policy.

A PULI header according to the present invention can contain multiple ULIs for different end-points of a user with each having its own time-stamp. Therefor a PULI header may serve as a means for conveying location information for SIM-less end-points.

The subsequent exemplary embodiments and use cases are provided for better understanding the functionality, but shall not limit the scope of the present invention.

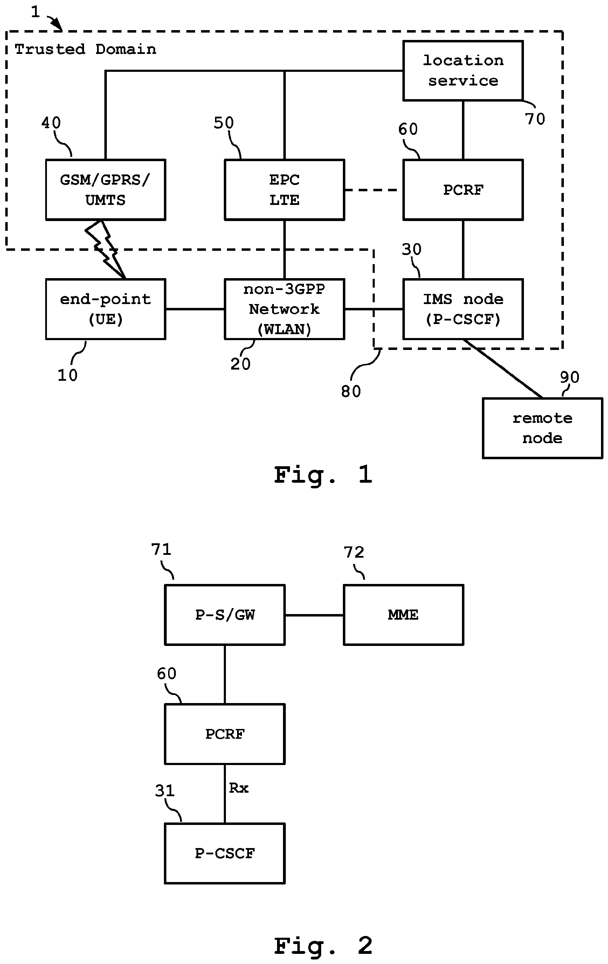

Fig. 1 depicts a block diagram of an infrastructure 1 adapted and configured for retrieving user location information and for generating private user location information headers comprising said retrieved user location information. Said infrastructure 1 may comprise a GSM/GPRS/UMTS radio access network (RAN) 40 that is communicatively coupled to an evolved packet core (EPC) 50 of an LTE (4G) network and in addition is coupled to a location service 70. Location service 70 is communicatively coupled to a policy and charging rules function 60, which in turn is communicatively coupled to a node of the IP multimedia subsystem 30, i.e. an IMS node. In addition the policy and charging rules function may be coupled to the evolved packet core 50. At least the GSM/GPRS/UMTS radio access network 40, the evolved packet core 50, the policy and charging rules function 60, the location service 70 and the IMS node 30 form the trusted domain 80. Within the trusted domain 80 each of the functional blocks may rely on user location information provided by any other functional block comprised in the trusted domain.

In contrast thereto functional blocks of the trusted domain consider user location information as provided by any functional block outside the trusted domain as unreliable or untrustworthy, since that information is open to manipulations.

Any access network 20 that does not form part of the trusted domain is considered unreliable with respect to information reflecting a geographical location of a coupled end-point, i.e. user equipment 10. Access network 20 may be implemented by any radio access or non-radio network that is communicatively coupled to the trusted domain 80, e.g. a wireless LAN network according to the 802.11 protocol family or according to the WIMAX protocol.

Note that the depicted infrastructure depicts functional entities as functional blocks that provide the generation of private user location information headers as described herein. However, an IMS infrastructure may comprise other functional entities as known to a skilled artisan. Furthermore the depicted blocks shall illustrate functional entities that may be implemented arbitrarily, i.e. either in hardware or software operated on one or a plurality of physical machines.

An end-point 10, i.e. a user equipment, is connected via a non-3GPP-type access network 20, e.g. WLAN, that in turn is communicatively coupled to an IP multimedia subsystem (IMS) network-node 30, i.e. a proxy server or an application server (AS) of an IMS core-network. In addition to the connection via the WLAN access point 20, the end-point 10 is connected to a GSM/GPRS (2G/2,5G) or UMTS (3G) cellular radio access network 40.

When an end-point requests a service from the IP multimedia subsystem, the end-point may transmit a corresponding SIP request message via access network 20. Access network 20 forwards the SIP request message including a so-called private access network information header to the proxy call session control function 30. A private access network information header of a request or response, i.e. a SIP message, generated and transmitted by the end-point 10 via the non-3GPP network, i.e. here the WLAN 20 does not contain reliable information about the user location, because the access network 20 is a non-3GPP-type network. The IMS core-network itself does not provide user location information associated with end-point 10. However, the end-point 10 may generate user location info and may provide that information by itself, but which is considered as unreliable as it is not generated by a 3GPP network entity. Since consideration of such un-trusted information is to be avoided within the trusted domain, as it might have been manipulated, the proxy call session control function server 30 (P-CSCF) does not retrieve reliable user location information with the SIP request message as received via access network 20.

In order to provide reliable user location information related to a SIP message received from an end-point via a non-3GPP network, the proxy call session control function server 30 requests user location information using a method according to the present invention. Proxy server 30 requests the user location information from a location service 70 via the policy and charging rules function PCRF 60. Location service 70 is a service located within trusted domain 80 and provides a private user location information header (PULI) to the requesting proxy server 30, wherein the provided header comprises the requested user location information. In this way, the information reflecting the user location is provided from a server located within the Trusted Domain 80 and in form of a private user location information header.

Said private user location information header (PULI) is attached to the SIP request by proxy server 30 in addition to the PANI header before forwarding the SIP request message to a node, i.e. proxy server 30 forwards the SIP request received from an end-point with the attached private user location information to a network node located in the trusted domain 80. Said user location information is additionally provided with a time stamp resembling the generation date-time of the location information. Consequently, the private user location information (PULI) header provides reliable and trusted information reflecting the location of the user, more exactly the location of the end-point or user equipment 10, alongside the private access network information (PANI) header containing access network information (ANI) like access-type (IP-CAN) and access-class (RAT). Note that in case the SIP message received from an end-point 10 is a response message, i.e. after a SIP request message has been forwarded to the end-point 10, the proxy call session control function 30 may request user location information from location service 70 similar as described above when processing a SIP request message. Accordingly, proxy server 30 may request user location information when processing a SIP request message or a SIP response message received from end-point 10 and may append the corresponding private user location information header to the message before forwarding that to a server within the trusted domain 80.

Instead of retrieving the user location information from a location service 70, the network-node 30 can also retrieve said information from the evolved packet core (EPC) 50 or a home subscriber service (HSS) - not depicted in figure 1 - or a Home Location Register (HLR) - not depicted in figure 1 - or a Gateway Mobile Location Center (GMLC) - not depicted in figure 1.

A remote node 90 that does not form part of the trusted domain 80, respectively the IMS core-network, must not receive SIP messages, i.e. responses or requests from within the trusted domain 80 that contain user information location in form of a PULI header. As user location information is considered as private information such user location information shall not leave the trusted domain 80. Therefore, it has to be ensured, that any node within the trusted domain 80 removes PULI headers from messages leaving the trusted domain 80 towards any remote node 90. Vice versa a request or response from the remote node 90 containing a PULI header including user location information from an un-trusted source to any node within the trusted domain 80 has to be cleared from said PULI header by the first node inside the trusted domain 80, i.e. in most cases by the proxy call session control function server 30, to ensure reliability and confidentiality within the trusted domain 80.

In Figs. 2-4 three different exemplary methods for retrieving user location information are shown. These examples are for easier understanding but shall not limit the scope of the present invention.

Fig. 2 depicts a P-CSCF 31. The P-CSCF 31 is a SIP proxy that receives SIP request messages from end-points and that passes SIP messages to an end-point on behalf of an IMS service, i.e. the P-CSCF forms the contact interface between end-points 10 and the IMS core-network. Hence the protection of the IMS core-network or the trusted domain 80 from processing unreliable user location information is aspect function of the P-CSCF 31. The P-CSCF 31 uses an internal Application Function (AF) for requesting an access-network-information report containing user location information via an Rx interface from a PCRF 60. The PCRF 60 is responsible for distributing service resources to different data connections and determines the respective charge for the provided services. The PCRF 60 contacts the P-S/GW 71 by using Gx interface which in turn contacts a Mobility Management Entity (MME) 72 to retrieve the requested user location information. The MME 72 uses a S1 interface towards an E-UTRAN Node B (eNodeB) which is the hardware component responsible for direct communication with user equipments/end-points 10 in LTE/4G to obtain the requested user location information. The MME may either use a stored location information info, e.g. a radio cell identifier, or the MME may request updated user location information from an eNodeB. In this way the MME may provide the requested user location information to the P-CSCF. The P-CSCF then adds the user location information to a SIP request or response in form of a PULI header on the side of the P-CSCF 31 before forwarding the corresponding SIP message.

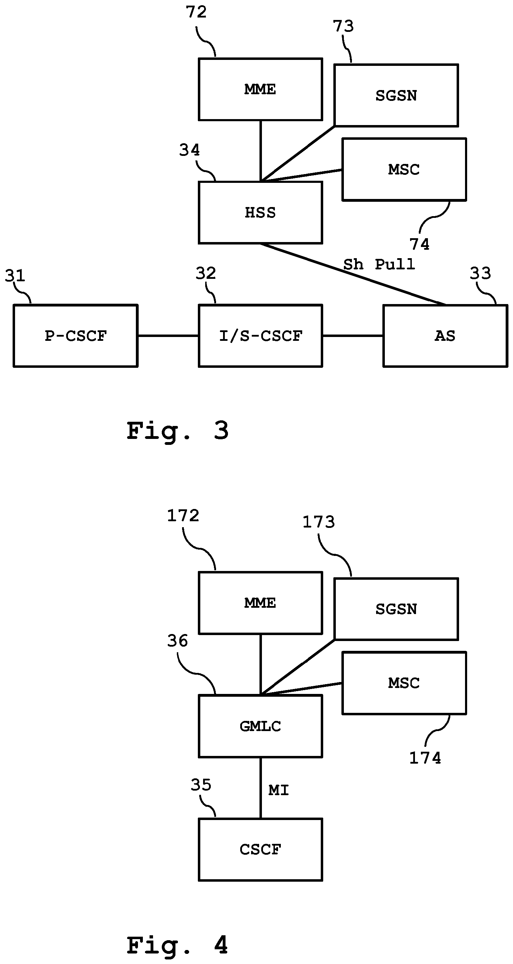

In Fig.3 an AS 33 uses a Sh Pull request via a Sh interface to retrieve user location information from a Home Subscriber Server (HSS) 34. The HSS 34 as master user database contains subscription-related information in form of subscriber profiles. Authentication and authorization of users or end-points 10, respectively, is handled by the HSS 34. The HSS 34 can retrieve the user location information from at least one of the MME 72 (4G) or a serving GPRS support node (SGSN) 73 (2G/2.5G) or a Mobile Switching Center MSC 74 (3G). The SGSN 73 is responsible for delivery of data packets from and to user equipments/end-points 10 in a GSM/GPRS (2G/2.5G) network and amongst other things for location services, too. The SGSN 73 stores user location information like current cell of end-points 10, thus the SGSN may provide a copy of a stored cell identifier as user location information.

The MSC 74 is an element designed for 2G networks but is also used in 2.5G/3G networks. The MSC 74 controls a network switching subsystem which is connected with a UMTS terrestrial radio access network (UTRAN) in 3G or a base station subsystem (BSS) in 2G/2.5G. UTRAN and BSS handle the radio communication with 3G and 2G/2.5G end-points 10 and provide user location information like current cell location. Since the MSC 74 stores the current location of an end-point in form of a radio cell identifier, the MSC may provide a copy of the cell identifier as user location information.

The thusly retrieved user location information is provided to the P-CSCF 31 via the AS 33 and an Interrogating Call Session Control Function or a Service Call Session Control Function (I-CSCF/S-CSCF) 32. Finally the P-CSCF 31 ads said user location information to requests or responses in form of a PULI header.

Fig.4 shows any kind of Call Session Control Function (CSCF) 35 using a web services interface towards a Gateway Mobile Location Centre (GMLC) 36 for location information retrieval. The GMLC 36 in turn contacts at least one of the MME 172 or the SGSN 173 or the MSC 174 of the visited mobile network to request user location information. The thusly retrieved user location information is added to requests or responses in form of a PULI header by the CSCF 35.

By combining information of the private access network information (PANI) header and the private user location information (PULI) header a provider is capable to ascertain the access type (ANI) and location (ULI) of any user in the core-network, even if the user is communicatively coupled by a non-3GPP-type access network.

In one embodiment of the present invention proxy servers or application servers that support the private user location information header may insert information reflecting the location of the respective user for any user identifiable within the current request or response. Hence, it is possible to provide trusted user location information whenever such information cannot be provided by a private access network information header.

In a further embodiment of the present invention proxy servers or application servers that support the private user location information header may re-generate the user location information with updated information that means location information with a newer time-stamp and younger age. Therefore, always the most recent user location information available is contained in any private user location information header.

In yet another embodiment of the present invention proxy servers or application servers that support the PULI header may optionally generate a time stamp value based on at least one of an age or a time the end-point was last known to be located in a cell of an 3GPP access network and a time-zone (if available) received upon retrieval. This may ensure that based on respective provider policies only user location information that was retrieved within an acceptable elapsed time span is utilized. Such last known information can be used instead of real-time user location information.

In a further embodiment of the present invention a time-stamp does not always need to be included to PULI headers. If the proxy or IMS AS is missing information to generate a time-stamp, then no time-stamp should be included.

On the other hand a proxy server or application server that supports the private user location information header and that receives a private user location information header form a network node within the trusted domain must use the value of said header in any request or response to represent the user location in operations that require such information regarding the user location. Thereby trusted user location information is accessible whenever and wherever inside the trusted domain necessary.

Further, a proxy server or application server 30 that supports the private user location information header must remove such header from requests or responses before further forwarding when said header was received from a network-node 90 outside the trusted domain 80, as any user location information coming from or generated by an instance outside the trusted domain 80 is considered unreliable. Accordingly, in case a proxy server or application server 30 facing an end-point 10 receives a private user location information header within a request or response that was generated by the end-point 10 or outside the trusted domain 80 the proxy server or application server 30 must remove said header. In this way the system ensures that un-trusted user location information cannot enter the trusted domain 80 from outside.

Additionally, a proxy server or application server 30 that supports the private user location information header must remove such header from requests or responses before forwarding when the next hop is a network node 90 outside the trusted domain 80 to prevent disclosure of user location information to any instance outside of the trusted domain 80. Privacy issues can be prevented in this way.

In order to maintain compatibility with the conventional private access network information (PANI) header and RFC 3455 the private user location information (PULI) header is an additional header alongside the PANI header. The PULI header comprises the following fields:
- P-User-Location-Info =: "P-User-Location-Info" HCOLON PServedUser-value (SEMI visited-network-id-param) SEMI location-info-param * (COMMA location-info-param)
- PServedUser-value =: name-addr / addr-spec
- visited-network-id-value =: "visited-network-id" EQUAL vnetwork-spec * (COMMA vnetwork-spec)
- location-info-param =: (location-info) (SEMI date-time-value)
- location-info =: cgi-3gpp / utran-cell-id-3gpp / local-time-zone / utran-sai-3gpp / extension-location-info
- extension-location-info =: generic-param
- cgi-3gpp =: "cgi-3gpp" EQUAL (token / quoted-string)
- utran-cell-id-3gpp =: "utran-cell-id-3gpp" EQUAL (token / quoted-string)
- local-time-zone =: "local-time-zone" EQUAL token / quoted-string)
- utran-sai-3gpp =: "utran-sai-3gpp" EQUAL (token / quoted-string)
- date-time-value =: "date-time" EQUAL date time

The vnetwork-spec, access-type, access-info, cgi-3gpp and utran-cell-id-3gpp are defined in RFC 3455.

The date and time are specified in RCF 1123

A private user location information (PULI) header may have the following format:
P-User-Location-Info:<sip:user@example> ; "visited-network-id"= "Visited network number 1" ; utran-cell-id = "MCC MNC ECI" ; "date-time"= dd mm yyy hh:mm:ss "GMT"

## Claims

1. Method for providing reliable user location information, ULI, of a user (10) transmitting a SIP message via an access network (20) to a server of an IP multimedia subsystem, IMS, located in a trusted domain (80), comprising the steps of:
- identifying by a Proxy Call Session Control Function, P-CSCF, (31) whether the access network (20) is part of the trusted domain (80), and
in case the access network (20) does not form part of the trusted domain (80):
- retrieving, by the P-CSCF (31), user location information, ULI, from another server located in the trusted domain (80) configured for providing ULI, and
- adding, by the P-CSCF (31), a private user location information, PULI, header comprising the retrieved user location information to the SIP message, wherein the PULI header is added to SIP messages besides a private access network information, PANI, header, and
- forwarding, by the P-CSCF (31), the SIP message including the PULI header to said server of the IMS located in the trusted domain (80),
wherein the step of retrieving user location information from another server located in the trusted domain (80) configured for providing ULI comprises requesting user location information by the P-CSCF (31) from a GSM or GPRS or UMTS or LTE radio access network node (40, 50), to which the user (10) is also connected, via a Policy and Charging Rules Function server (60) and a location service (70),
and wherein the access network is a non-3GPP-type network (20).

2. Method according to any preceding claim, wherein the ULI in the PULI header further comprises a user location information time-stamp.

3. Method according to any preceding claim, wherein the PULI header may contain corresponding ULIs for different end-points (10) of one user.

4. Method according to any preceding claim wherein the user location information may not exceed a predefined age.

## Patentansprüche

1. Verfahren zum Bereitstellen zuverlässiger Benutzerstandortinformationen (User Location Information - ULI) eines Benutzers (10), der eine SIP-Nachricht über ein Zugangsnetzwerk (20) an einen Server eines IP-Multimedia-Subsystems (IMS) übertragen, das sich in einer vertrauenswürdigen Domäne (80) befindet, das die folgenden Schritte umfasst:
- Identifizieren durch eine Proxy Call Session Control Function, P-CSCF, (31), ob das Zugangsnetzwerk (20) ein Teil der vertrauenswürdigen Domäne (80) ist, und für den Fall, dass das Zugangsnetzwerk (20) keinen Teil der vertrauenswürdigen Domäne (80) ausbildet:
- Abrufen, durch die P-CSCF (31), von Benutzerstandortinformationen (ULI) von einem anderen Server, der sich in der vertrauenswürdigen Domäne (80) befindet und der zum Bereitstellen von ULI konfiguriert ist, und
- Hinzufügen, durch die P-CSCF (31), eines Headers für private Benutzerstandortinformationen (Private User Location Information - PULI), der die abgerufenen Benutzerstandortinformationen umfasst, zu der SIP-Nachricht, wobei der PULI-Header zu SIP-Nachrichten neben einem Header für private Zugangsnetzwerkinformationen (private access network information - PANI) hinzugefügt wird, und
- Weiterleiten, durch die P-CSCF (31), der SIP-Nachricht einschließlich des PULI-Headers an den Server des IMS, der sich in der vertrauenswürdigen Domäne (80) befindet,
wobei der Schritt des Abrufens von Benutzerstandortinformationen von einem anderen Server, der sich in der vertrauenswürdigen Domäne (80) befindet und konfiguriert ist zum Bereitstellen von ULI, das Anfordern von Benutzerstandortinformationen durch die P-CSCF (31) von einem GSM- oder GPRS- oder UMTS- oder LTE-Funkzugangsnetzwerkknoten (40, 50), mit dem der Benutzer (10) ebenso verbunden ist, über einen Policy-and-Charging-Rules-Function-Server (60) und einen Standortdienst (70) umfasst,
und wobei das Zugangsnetzwerk ein Netzwerk (20) vom Nicht-3GPP-Typ ist.

2. Verfahren nach einem der vorhergehenden Ansprüche, wobei die ULI in dem PULI-Header ferner einen Zeitstempel von Benutzerstandortinformationen umfassen.

3. Verfahren nach einem der vorhergehenden Ansprüche, wobei der PULI-Header entsprechende ULI für unterschiedliche Endpunkte (10) eines Benutzers enthalten kann.

4. Verfahren nach einem der vorhergehenden Ansprüche, wobei die Benutzerstandortinformationen ein vordefiniertes Alter nicht überschreiten dürfen.

## Revendications

1. Procédé de fourniture d'informations de localisation d'utilisateur fiables, ULI, d'un utilisateur (10) transmettant un message SIP par l'intermédiaire d'un réseau d'accès (20) à un serveur d'un sous-système multimédia IP, IMS, situé dans un domaine de confiance (80), comprenant les étapes de :
- l'identification par une fonction de contrôle de session d'appel mandataire, P-CSCF, (31) si le réseau d'accès (20) fait partie du domaine de confiance (80), et dans le cas où le réseau d'accès (20) ne fait pas partie du domaine de confiance (80) :
- la récupération, par la P-CSCF (31), des informations de localisation d'utilisateur, ULI, à partir d'un autre serveur situé dans le domaine de confiance (80) configuré pour fournir l'ULI, et
- l'ajout, par la P-CSCF (31), d'un en-tête d'informations de localisation d'utilisateur privé, PULI, comprenant les informations de localisation d'utilisateur récupérées au message SIP, l'en-tête PULI étant ajouté aux messages SIP en plus d'un en-tête d'informations de réseau d'accès privé, PANI, et
- la transmission, par la P-CSCF (31), du message SIP comportant l'en-tête PULI audit serveur de l'IMS situé dans le domaine de confiance (80),
l'étape de récupération des informations de localisation d'utilisateur à partir d'un autre serveur situé dans le domaine de confiance (80) configuré pour fournir l'ULI comprenant la demande d'informations de localisation d'utilisateur par la P-CSCF (31) à partir d'un nœud de réseau d'accès radio GSM ou GPRS ou UMTS ou LTE (40, 50), auquel l'utilisateur (10) est également connecté, par l'intermédiaire d'un serveur de fonction de politique et de règles de facturation (60) et d'un service de localisation (70),
et le réseau d'accès étant un réseau de type non 3GPP (20).

2. Procédé selon l'une quelconque des revendications précédentes, dans lequel l'ULI dans l'en-tête PULI comprend en outre une estampille temporelle d'informations de localisation d'utilisateur.

3. Procédé selon l'une quelconque des revendications précédentes, dans lequel l'en-tête PULI peut contenir des ULI correspondantes pour différents points d'extrémité (10) d'un utilisateur.

4. Procédé selon l'une quelconque des revendications précédentes, dans lequel les informations de localisation d'utilisateur ne peuvent pas dépasser un âge prédéfini.
